# EUROPÄISCHE PATENTSCHRIFT

(11) **EP 3 842 671 B1**
(45) Veröffentlichungstag und Bekanntmachung des Hinweises auf die Patenterteilung: **15.05.2024**
(21) Anmeldenummer: 20000490.1
(22) Anmeldetag: 23.12.2020
(51) Int. Cl.: F16J 15/3256, F16J 15/3228, F16J 15/3208, F16J 15/3232

(54) **WELLENDICHTUNG, INSBESONDERE RADIALWELLENDICHTUNG, MIT WENIGSTENS EINEM DICHTELEMENT**
SHAFT SEAL, IN PARTICULAR RADIAL SHAFT SEAL, WITH AT LEAST ONE SEALING ELEMENT
JOINT D'ÉTANCHÉITÉ D'ARBRE, EN PARTICULIER JOINT D'ÉTANCHÉITÉ D'ARBRE RADIAL, POURVU D'AU MOINS UN ÉLÉMENT D'ÉTANCHÉITÉ

(30) Priorität: 23.12.2019 DE 102019008984
(43) Veröffentlichungstag der Anmeldung: 30.06.2021
(73) Patentinhaber: KACO GmbH + Co. KG, 74912 Kirchardt (DE)
(72) Erfinder: PODESWA, Matthias, 74360 IIsfeld (DE); VINOGRADOV, Alexey, 74223 Flein (DE)
(74) Vertreter: Kohl, Karl-Heinz

(56) Entgegenhaltungen:
- EP-A2- 0 218 394
- EP-A2- 1 954 967
- WO-A1-2007/069597
- WO-A1-2018/211073
- CN-Y- 2 521 446
- GB-A- 2 181 191
- US-A- 4 819 952
- US-B1- 6 428 013

## Beschreibung

Die Erfindung betrifft eine Wellendichtung, insbesondere eine Radialwellendichtung, nach dem Oberbegriff des Anspruchs 1.

Bei Wellendichtungen in Form von Radialwellendichtungen wird als Werkstoff für die Dichtelemente wegen seiner besonderen physikalischen und chemischen Eigenschaften vorteilhaft Polyfluorcarbon eingesetzt, insbesondere Polytetrafluorethylen. Die Dichtelemente sind als Ringscheiben ausgebildet, deren radial innerer Bereich zur Bildung der Dichtlippe elastisch gebogen ist. Bei Polyfluorcarbonen, insbesondere bei Polytetrafluorethylen, ist ein Kriechen zu beobachten. Zudem haben diese Materialien eine verhältnismäßig geringe mechanische Festigkeit. Das Kriechen dieses Werkstoffs führt dazu, dass die Dichtwirkung nachlässt. Um dieser Kriechwirkung zu begegnen, wird darum die radiale Vorspannung, die auf die Dichtlippe wirkt, erhöht. Dies führt aber zu einem entsprechend stärkeren Verschleiß der Dichtlippe. Dichtelementen werden daher unterschiedliche Füllstoffe zugesetzt, die ihre Herstellung verkomplizieren und verteuern.

Die DE 10 2012 001 226 beschreibt eine alternative Wellendichtung, insbesondere eine Radialwellendichtung, mit wenigstens einem Dichtelement, das mit einer Dichtlippe versehen ist, die an einer abzudichtenden Fläche unter radialer Kraft anliegt, und mit wenigstens einem Elastomerelement, das die Dichtlippe in Richtung auf die abzudichtende Fläche hin belastet. Geeignete Elastomerelemente können aufgrund ihres Querschnitts nur kostenintensiv hergestellt werden.

CN 2 521 446 Y offenbart eine Dichtungsanordnung gemäß dem Oberbegriff des Anspruchs 1.

Der Erfindung liegt die Aufgabe zugrunde, die gattungsgemäße Wellendichtung so auszubilden, dass sie einfacher und kostengünstiger herzustellen ist.

Diese Aufgabe wird bei der gattungsgemäßen Wellendichtung erfindungsgemäß mit den kennzeichnenden Merkmalen des Anspruches 1 gelöst.

Die Wellendichtung umfasst ein Elastomerelement, das das Dichtelement abstützt. Als Elastomerelement dient erfindungsgemäß ein Dichtring. Erfindungsgemäß stützt der Dichtring das Dichtelement derart ab, dass die Dichtlippe, welche die dynamische Abdichtung zur Welle hin bewirkt, in Richtung auf die abzudichtende Fläche hin gedrückt wird. Die Dichtlippe ist regelmäßig in Richtung auf eine Mediumsseite hin gebogen. Der Dichtring kontaktiert nicht die Dichtlippe selbst, sondern einen Übergangsbereich des Dichtelements zur Dichtlippe hin, in dem das Dichtelement bereits gebogen verläuft. Der Dichtring trägt damit wirkungsvoll dazu bei, einer nachlassenden Vorspannung durch Kriechen und durch Verschleiß der Dichtlippe entgegenzuwirken. Als einfaches Bauteil erleichtert der Dichtring seine fehlerfreie Montage, was die Fehlerrate und die Herstellungskosten der Wellendichtung herabsetzt.

Das Dichtelement ist als Ringscheibe ausgebildet, deren radial innen liegender Bereich zur Bildung der Dichtlippe elastisch gebogen ist. Die Ringscheibe beansprucht wenig Raum und trägt damit zu geringen Abmessungen und einer kostengünstigen Herstellung der Wellendichtung bei.

Nach einer vorteilhaften Ausgestaltung der Erfindung kann der Dichtring ein O-Ring mit kreisrundem Querschnitt sein. Damit verfügt er über eine geläufige Standardform, weshalb er sich beispielsweise durch Spritzgießen industriell, in großen Stückzahlen und damit kostengünstig herstellen lässt. Aufgrund seiner kostengünstigen und einfachen Verfügbarkeit erfordert er keine kostenträchtige Vorratshaltung. Dies setzt die Herstellungskosten der Wellendichtung herab.

Nach einer alternativen Ausgestaltung der Erfindung kann der Dichtring einen ovalen Querschnitt aufweisen. Je nach Einbausituation kann der ovale Querschnitt ohne oder mit einer Symmetrieachse oder mit zwei Symmetrieachsen ausgebildet sein. Jedenfalls kann der ovale Querschnitt des Dichtrings derart ausgebildet sein, dass er - schon im unverformten Zustand - eine möglichst große Kontaktfläche mit dem Dichtelement aufweist. Dazu kann der ovale Dichtring derart ausgelegt werden, dass seine größere Querschnittsabmessung in der Wellendichtung radial und die kleinere axial verläuft. Damit kann sich die abstützende Wirkung des Dichtrings über eine größere Fläche des Dichtelements erstrecken und sich damit in radialer Richtung weiter entfalten.

Nach einer alternativen nicht erfindungsgemäßen Ausgestaltung kann der Dichtring ein Quadring sein oder knochenförmigen Querschnitt aufweisen. Der knochenförmige Querschnitt lässt sich beispielsweise durch Formpressen erzielen. Der Quadring kann zwei Kontaktlinien zum Dichtelement bieten, die bezüglich der Abmessungen des Quadrings maximal weit voneinander entfernt liegen. Damit kann es gelingen, die Unterstützung des Dichtelements bzw. den Druck auf die Dichtlippe insbesondere möglichst weit radial einwärts wirken zu lassen. Zudem kann sich das Klaffen einer Kontaktfuge zwischen dem Dichtelement und einem in axialer Richtung wirkenden Abstützelement des Dichtelements vermeiden lassen.

Die Wellendichtung kann eine Abstützfläche für den Dichtring aufweisen, die dem Dichtelement axial gegenüberliegt und an der der montierte Dichtring anliegt, um eine Stützkraft auf das Dichtelement auszuüben.

Nach einer weiteren vorteilhaften Ausgestaltung der Erfindung kann die Abstützfläche eine ringförmige Sicke aufweisen. Sie kann durchgehend ausgebildet sein oder mit Unterbrechungen, beispielsweise als nebeneinander angeordnete Vertiefungen. Die radialen Ränder der Sicke konzentrieren eine Kontaktkraft von der Abstützfläche auf den an ihr anliegenden Dichtring auf eine kleinere Fläche, womit die Belastung auf den Dichtring steigt. Außerdem spreizen sie die Krafteinleitung von einer - im entspannten Zustand - in radialer Richtung schmalen Krafteinleitungsfläche auf zwei Einleitungsbereiche am Dichtring. Der Dichtring kann damit seine Stützkraft über einen breiten Bereich hinweg weiterleiten.

Nach einer weiteren vorteilhaften Ausgestaltung der Erfindung kann die abzudichtende Fläche die Mantelfläche einer Welle oder einer Achse sein. Damit lässt sich eine kompakte Bauform erreichen.

Alternativ kann die abzudichtende Fläche die Mantelfläche einer Laufhülse sein, die drehfest auf einer Welle oder Achse sitzt. Das Dichtelement hat damit keinen direkten Kontakt mit der Welle oder Achse. Das Material der Laufhülse dagegen kann auf ein optimales Zusammenwirken mit dem Dichtelement hin ausgewählt sein.

Nach einer weiteren vorteilhaften Ausgestaltung der Erfindung kann eine Mehrzahl an Dichtelementen axial nebeneinander angeordnet sein, die mit einer Seite an jeweils einem Abstützelement anliegen. Damit kann sich die Dichtwirkung der Wellendichtung steigern und höheren Anforderungen anpassen lassen, womit sich der Einsatzbereich der Wellendichtung vergrößern lässt.

Vorteilhafterweise können die Dichtelemente dann mit ihrer anderen Seite an einem oben näher beschriebenen Dichtring anliegen.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

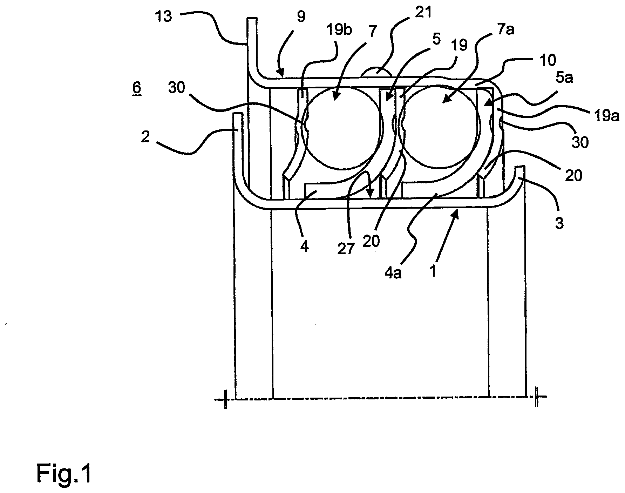

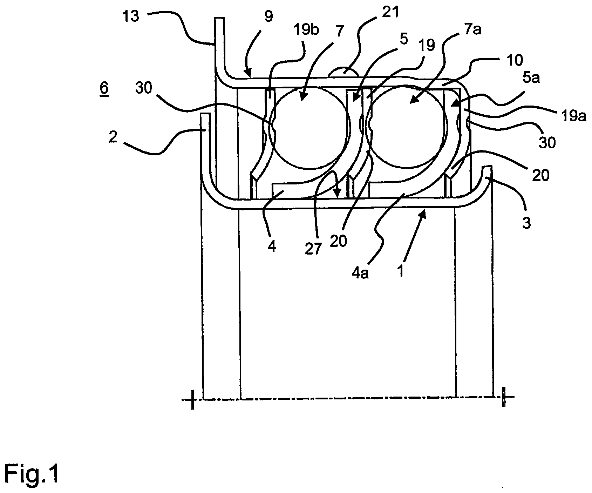

Das Prinzip der Erfindung wird im Folgenden anhand einiger in den Zeichnungen dargestellter Ausführungsformen näher erläutert. Es zeigen
- Fig. 1 bis 4: jeweils im Axialhalbschnitt verschiedene Ausführungsbeispiele von Wellendichtungen.

Die Wellendichtung gemäß Fig. 1 hat eine Laufhülse 1, die drehfest auf einer abzudichtenden (nicht dargestellten) Welle sitzt. Die Laufhülse 1 sitzt vorzugsweise mit Presssitz auf der abzudichtenden Welle. An einem Ende hat die Laufhülse 1 einen radial nach außen gerichteten Ringflansch 2. Das andere Ende 3 der Laufhülse 1 kann trichterförmig aufgeweitet sein. Die radiale Breite des Ringflansches 2 ist größer als die radiale Breite des aufgeweiteten Endes 3. Das trichterförmig erweiterte Ende 3 der Laufhülse 1 trägt zu einer besseren Zentrierung bei der Montage der Wellendichtung bei und kann als Transportsicherung sowie auch zur Kapselung einer Vorschmierung gegen Verschleppung und Verunreinigung dienen.

Auf der zylinderförmigen Außenseite der Laufhülse 1 bzw. ihrer Mantelfläche 27 liegen zwei Dichtlippen 4, 4a zweier Dichtelemente 5, 5a unter radialer Vorspannung dichtend an. Sie bilden einen Bestandteil einer dynamischen Abdichtung der Wellendichtung. Alternativ können auch nur ein Dichtelement oder mehr als zwei Dichtelemente vorgesehen sein. Das Dichtelement 5, 5a ist eine Dichtscheibe, deren radial innen liegender Bereich zur Bildung der Dichtlippe 4, 4a elastisch gebogen ist. Die Dichtlippe 4, 4a ist in Richtung auf eine Mediumsseite 6 hin elastisch gebogen.

An seiner von der Mediumsseite 6 abgewandten Seite liegt jedes Dichtelement 5, 5a an einer Abstützscheibe 19, 19a an. Sie liegen mit ihrem radial inneren Bereich 20 flächig am Übergangsbereich des Dichtelementes 5, 5a in die Dichtlippe 4, 4a an und sind mit ihrem radial inneren Abschnitt in Richtung auf die Mediumsseite 6 hin gebogen. Eine weitere Abstützscheibe 19b ist an einer der Mediumsseite 6 zugewandten Seite und äquidistant zu den Abstützscheiben 19, 19a angebracht. Die Abstützscheibe 19b übergreift, in Achsrichtung der Wellendichtung gesehen, den Ringflansch 2 der Laufhülse 1, der axialen Abstand von der Abstützscheibe 19b hat.

Die Abstützscheiben 19, 19a, 19b erstrecken sich radial bis zu einem zylindrischen Mantel 10 eines Gehäuses 9, an dem die Abstützscheiben 19, 19b mit ihrem radial äußeren Rand befestigt sind. Die Abstützscheibe 19a geht rechtwinklig in den Mantel 10 über, mit dem die Abstützscheibe 19a vorteilhaft einstückig ausgebildet ist. Das andere Ende des Mantels 10 geht rechtwinklig in einen radial nach außen gerichteten Ringflansch 13 über. Mit ihm liegt das Gehäuse 9 in der Einbaulage der Wellendichtung in bekannter Weise an einer eine Aufnahmeöffnung für die Wellendichtung aufweisenden Seite eines Aggregats an. Das Gehäuse 9 ist vorteilhaft einstückig ausgebildet und besteht vorteilhaft aus metallischem Material. Je nach Einsatzgebiet der Wellendichtung kann das Gehäuse 9 aus einem geeigneten, vorzugsweise aus hartem Kunststoff bestehen.

Bestehen die Abstützscheiben 19, 19b aus metallischem Werkstoff, dann sind sie vorteilhaft an den Mantel 10 angeschweißt. Sie können alternativ auch eingepresst sein.

Auf der Außenseite des Mantel 10 des Gehäuses 9 befindet sich ein Dichtmittel 21, das eine statische Abdichtung in der Einbaulage der Wellendichtung bildet. Das Dichtmittel 21 kann zum Beispiel, wie dargestellt, als Dichtraupe oder als flächige Schicht aufgebracht sein und erstreckt sich ringförmig über den Umfang des Mantels 10. In der Einbaulage der Wellendichtung wird das Dichtmittel 21 elastisch verformt und sorgt somit für eine zuverlässige statische Abdichtung.

An der der Mediumsseite 6 zugewandten Seite ist jedes Dichtelement 5, 5a von einem O-Ring 7, 7a als Elastomerelement abschnittsweise bedeckt. Der O-Ring 7, 7a hat einen kreisringförmigen Querschnitt und liegt über einen Umfangsabschnitt hinweg und damit flächig am Dichtelement 5, 5a bis in dessen Übergangsbereich zur Dichtlippe 4, 4a an. Er besteht aus elastischem Kunststoff, Gummi, einem gummiähnlichen Material und dgl.

Der O-Ring 7, 7a liegt an seiner der Mediumsseite 6 zugewandten Seite axial an der Abstützscheibe 19 bzw. 19b an. Er wird unter Vorspannung zwischen das Dichtelement 5, 5a und die Abstützscheiben 19, 19b eingesetzt, so dass er sich verformt (nicht dargestellt) und dadurch eine Drucckraft auf das Dichtelement 5, 5a und dessen Übergangsbereich zur Dichtlippe 4, 4a aufbringt.

Der kreisförmige Querschnitt des O-Rings 7, 7a ermöglicht einen sehr kompakten Aufbau der Wellendichtung. Als Standardbauteil ist der O-Ring 7, 7a kostengünstig und einfach erhältlich.

Die Abstützscheiben 19, 19a, 19b weisen jeweils eine ringförmig umlaufende Sicke 30 auf. Sie kann alternativ als ringförmige Anordnung von Vertiefungen und damit quasi mit Unterbrechungen ausgebildet sein. Die Sicke 30 erhöht die Steifigkeit der Abstützscheiben 19, 19a, 19b, so dass sie ihre Steifigkeit nicht allein aus ihrer Materialdicke beziehen müssen. Sie können daher bei gleicher Belastbarkeit schlanker ausgebildet werden, womit die Wellendichtung kompakter und ihre Herstellung kostengünstiger ausfallen kann.

Die Sicke ist außerdem so angebracht, dass sie in der Kontaktfläche jeweils der Abstützscheiben 19, 19b und der montierten O-Ringe 7, 7a liegt. Damit beeinflusst sie die Druckwirkung des O-Rings 7, 7a, weil sie die ursprünglich konzentrierte Kontaktfläche, die ohne Belastung des O-Rings 7, 7a im gezeigten Querschnitt punktförmig wäre, vergrößert. Unter Belastung des O-Rings 7, 7a entlastet die Sicke 30 zwar einen zentralen Bereich der Kontaktfläche des O-Rings 7, 7a, erhöht aber die Belastung beidseits des zentralen Bereichs und konzentriert sie durch die Ränder der Sicke 30 auf kleinem Raum.

Vorteilhaft liegen die O-Ringe 7, 7a auch an der Innenseite des Mantels 10 an, wodurch die Dichtringe 7, 7a in radialer Richtung abgestützt sind.

Das Dichtelement 5, 5a ist in der beschriebenen Weise zwischen dem O-Ring 7, 7a und der Abstützscheibe 19, 19a angeordnet und liegt an ihnen jeweils an. Die Abstützscheiben 19, 19a, 19b fixieren die Einzelteile 7, 7a, 5, 5a der Wellendichtung. Von den Dichtlippen 4, 4a haben die O-Ringe 7, 7a, ausreichend Abstand, so dass sie die Beweglichkeit der Dichtlippen 4, 4a nicht behindern.

Die Abstützscheiben 19, 19a, 19b und/oder der O-Ring 7, 7a können mit dem Dichtelement 5, 5a chemisch und/oder mechanisch verbunden sein.

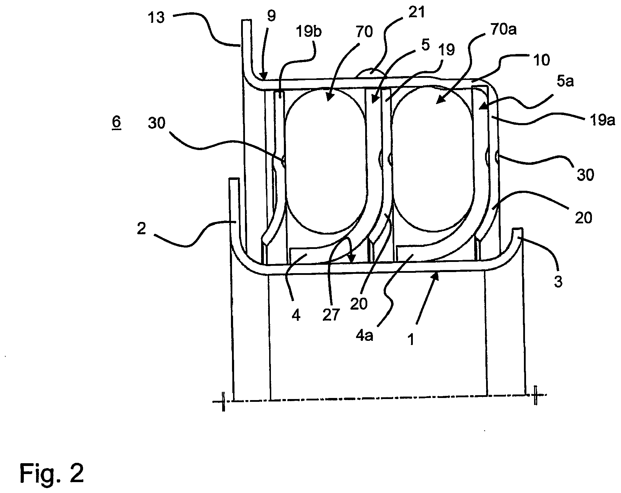

Das Ausführungsbeispiel gemäß Fig. 2 unterscheidet sich von dem zuvor beschriebenen Ausführungsbeispiel durch einen abweichenden Querschnitt des O-Rings 70, 70a. Er hat statt eines kreisringförmigen einen ovalen Querschnitt, insbesondere einen symmetrischen Querschnitt mit jeweils zwei einander gegenüberliegenden Kreisbögen und geraden Stücken. Der O-Ring 70, 70a ist so angeordnet, dass seine geringere Breite axial verläuft.

Da die Wellendichtung infolge des ovalen Querschnitts des O-Rings 70, 70a in Radialrichtung breiter ist, sind auch die Abstützringe 19, 19a, 19b radial breiter als beim vorigen Ausführungsbeispiel. Entsprechend abweichend ist auch das Dichtelement 5, 5a dimensioniert, dessen an der Abstützscheibe 19, 19a liegender Bereich radial breiter ist als bei der vorigen Ausführungsform. Die Sicke 30 ist aufgrund des ovalen Querschnitts des O-Rings 70, 70a von untergeordneter Bedeutung, weshalb sie hier entbehrlich ist, aber selbstverständlich vorgesehen sein kann.

Alle übrigen Bestandteile der Wellendichtung, die mit demselben Bezugszeichen wie im vorigen Ausführungsbeispiel bezeichnet sind, sind unverändert, haben die dort genannten Eigenschaften und Funktionen und werden daher zur Vermeidung von Wiederholungen nicht erneut beschrieben, sondern gelten als auch zur Fig. 2 offenbart.

Die in radialer Richtung breitere Dimensionierung des Dichtrings 70, 70a hat - neben den oben bereits genannten Effekten - den weiteren Vorteil eines radial größeren Wirkbereichs. Der O-Ring 70, 70a stützt folglich das ihm zugeordnete Dichtelement 5, 5a über eine größere radiale Länge ab, was der Dichtwirkung der Wellendichtung zugutekommt. Dies beruht nicht nur auf einer größeren Kontaktfläche des O-Rings 70, 70a mit der Abstützscheibe 19, 19b einerseits und mit dem Dichtelement 5, 5a andererseits, sondern auch in der weiter in den Übergangsbereich des Dichtelements 5, 5a zu dessen Dichtlippe 4, 4a hin wirkenden Abstützung. Die Abstützung hält nicht nur die Vorspannung der Dichtlippe 4, 4a aufrecht, sondern verhindert auch eine Ablösung des Dichtelements 5, 5a vom Abstützring 19, 19a in einer radial auswärts führenden Richtung.

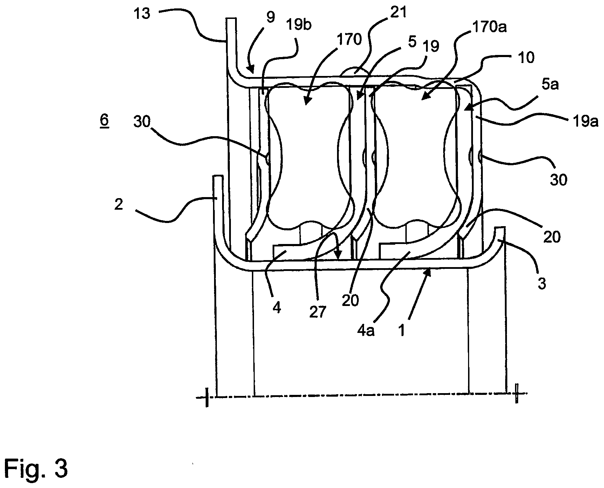

Das nicht erfindungsgemäße Ausführungsbeispiel gemäß Fig. 3 unterscheidet sich von dem zuvor beschriebenen Ausführungsbeispiel der Fig. 2 durch einen abweichenden Querschnitt des Dichtrings 170, 170a. Der Querschnitt lässt sich als knochenförmig bezeichnen. Er ergibt sich von einer Rechteckform ausgehend durch eine starke Abrundung der Ecken durch Halbkreise (im Axialschnitt gesehen), die anstelle der Seiten des Rechtecks fließend in bogenförmige bzw. konkave Einschnürungen übergehen. Dadurch ergibt sich eine Materialverteilung des Dichtrings 170, 170a, die zu einer höheren Konzentration des elastischen Materials in vier Bereichen am Umfang des Dichtrings 170, 170a führt.

Er kann Außenabmessungen aufweisen, die prinzipiell denen des O-Rings 70, 70a der Fig. 2 in radialer und in axialer Richtung entsprechen. Damit können alle übrigen Bestandteile der Wellendichtung grundsätzlich identisch dimensioniert sein und dieselben Eigenschaften und Funktionen wie dort bieten, weshalb sie zur Vermeidung von Wiederholungen nicht erneut beschrieben werden, sondern auch als zur Fig. 3 offenbart gelten. Lediglich die Sicke 30 wäre wegen der besonderen Querschnittsform des Dichtrings 170, 170a wirkungslos, weshalb sie entfallen kann.

Der besondere knochenförmige Querschnitt des Dichtrings 170, 170a führt trotz vor allem radial identischer Abmessungen wie in Fig. 2 zu einem demgegenüber verbesserten radialen Wirkbereich. Denn nicht nur die Abstützung des Dichtrings 170, 170a am jeweiligen Abstützring 19, 19b verlagert sich in einen, in radialer Richtung betrachtet, umfangsnahen Bereich des Dichtrings 170, 170a. Auch seine Stütz- und Krafteinwirkung auf das Dichtelement 5, 5a ist in gleicher Weise radial gespreizt, so dass er insbesondere radial noch weiter nach innen und damit noch effektiver in den Übergangsbereich des Dichtelements 5, 5a und dort noch näher zur Dichtlippe 4, 4a hin wirkt.

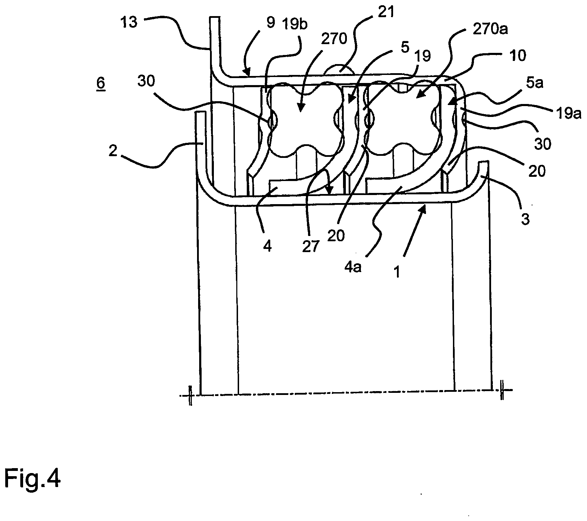

Das nicht erfindungsgemäße Ausführungsbeispiel gemäß Fig. 4 folgt dem Gestaltungsprinzip des Dichtrings 170, 170a des vorangehenden Ausführungsbeispiels der Fig. 3. Es unterscheidet sich von ihm lediglich in den radialen Abmessungen des Quadrings 270, 270a. Der Querschnitt des Quadrings 270, 270a führt daher insbesondere zu einem kompakteren Aufbau der Wellendichtung als im Ausführungsbeispiel gemäß Fig. 3.

Der Querschnitt des Quadrings 270, 270a ist punktsymmetrisch und lässt sich damit einem Quadrat einbeschreiben. Darin gleicht er dem Querschnitt des Ausführungsbeispiels gemäß Fig. 1, so dass alle übrigen Bestandteile der Wellendichtung, die mit demselben Bezugszeichen wie in Fig. 1 bezeichnet sind, ihr gegenüber unverändert sein können, die dort genannten Eigenschaften und Funktionen besitzen und daher zur Vermeidung von Wiederholungen nicht erneut beschrieben werden, sondern auch als zur Fig. 4 offenbart gelten.

Im Unterschied zum Ausführungsbeispiel gemäß Fig. 1 führt der Querschnitt des Quadrings 270, 270a vor allem zu einem demgegenüber verbesserten radialen Wirkbereich. Wie oben zur Fig. 3 erläutert, reicht er insbesondere radial ähnlich weit nach innen und damit ähnlich effektiv in den Übergangsbereich des Dichtelements 5, 5a und dort vergleichbar nahe zur Dichtlippe 4, 4a hin. Zusammen mit seinen kompakten Abmessungen ermöglicht er so eine hochleistungsfähige Wellendichtung.

Da es sich bei den vorhergehenden, detailliert beschriebenen Wellendichtungen um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen des Gehäuses in anderer Form als in der hier beschriebenen erfolgen.

## Patentansprüche

1. Dichtungsanordung mit einem Gehäuse (9) und einer Wellendichtung, insbesondere einer Radialwellendichtung, mit wenigstens einem Dichtelement (5, 5a) aus Polyfluorcarbon, vorzugsweise aus Polytetrafluorethylen, das mit einer Dichtlippe (4, 4a) versehen ist, die an einer abzudichtenden Fläche unter radialer Kraft anliegt, und mit wenigstens einem durch einen Dichtring (7, 7a, 70, 70a, 170, 170a, 270, 270a) gebildeten Elastomerelement, das das Dichtelement (5, 5a) abstützt, das eine Dichtscheibe ist, deren radial innen liegender Bereich zur Bildung der Dichtlippe (4, 4a) in Richtung auf eine Mediumseite (6) hin elastisch gebogen ist,
wobei der Dichtring (7, 7a, 70, 70a, 170, 170a, 270, 270a) derart flächig am Dichtelement (5, 5a) bis in dessen Übergangsbereich zur Dichtlippe (4, 4a ) anliegt, dass der Dichtring (7, 7a, 70, 70a, 170, 170a, 270, 270a) ausreichend Abstand von der Dichtlippe (4, 4a) hat, so dass der Dichtring die Beweglichkeit der Dichtlippe (4, 4a') nicht behindert,
**dadurch gekennzeichnet, dass** das Dichtelement (5, 5a) an seiner von der Mediumsseite (6) abgewandten Seite an einer Abstützscheibe (19, 19a) anliegt, die mit ihrem radial inneren Bereich (20) flächig am Übergangsbereich des Dichtelementes (5, 5a) in die Dichtlippe (4, 4a) anliegt, mit ihrem radial inneren Abschnitt in Richtung auf die Mediumsseite (6) hin gebogen ist und sich radial bis zu einem zylindrischen Mantel (10) des Gehäuses (9) erstreckt, an dem die Abstützscheibe (19) mit ihrem radial äußeren Rand befestigt ist.

2. Dichtungsanordung nach Anspruch 1,
**dadurch gekennzeichnet, dass** der Dichtring (7, 7a) einen kreisrunden Querschnitt aufweist.

3. Dichtungsanordung nach Anspruch 1,
**dadurch gekennzeichnet, dass** der Dichtring (70, 70a) einen ovalen Querschnitt aufweist.

4. Dichtungsanordung nach einem der Ansprüche 1 bis 3,
**dadurch gekennzeichnet, dass** der Dichtring (7, 7a, 70, 70a, 170, 170a, 270, 270a) an einer Abstützfläche der Abstützscheibe (19, 19a, 19b) anliegt.

5. Dichtungsanordung nach Anspruch 4,
**dadurch gekennzeichnet, dass** in der Abstützfläche (19, 19a, 19b) wenigstens eine Sicke (30) vorgesehen ist.

6. Dichtungsanordung nach einem der Ansprüche 1 bis 5,
**dadurch gekennzeichnet, dass** die abzudichtende Fläche die Mantelfläche einer Welle oder einer Achse ist.

7. Dichtungsanordung nach einem der Ansprüche 1 bis 6,
**dadurch gekennzeichnet, dass** die abzudichtende Fläche die Mantelfläche (27) einer Laufhülse (1) ist, die drehfest auf einer Welle oder Achse sitzt.

8. Dichtungsanordung nach einem der Ansprüche 1 bis 7,
**dadurch gekennzeichnet, dass** eine Mehrzahl an Dichtelementen (5, 5a) axial nebeneinander angeordnet ist, die mit einer Seite an jeweils einer Abstützfläche (19, 19a) anliegen.

## Claims

1. Sealing arrangement with a housing (9) and a shaft seal, in particular a radial shaft seal, with at least one sealing element (5, 5a) made of polyfluorocarbon, preferably of polytetrafluoroethylene, which is provided with a sealing lip (4, 4a), which bears against a surface to be sealed under radial force, and with at least one elastomer element formed by a sealing ring (7, 7a, 70, 70a, 170, 170a, 270, 270a) which supports the sealing element (5, 5a), which is a sealing disc, whose radially inner region is elastically bent in the direction of a medium side (6) to form the sealing lip (4, 4a), wherein the sealing ring (7, 7a, 70, 70a, 170, 170a, 270, 270a) is attached to the sealing element (5, 5a) as far as its transition region to the sealing lip (4, 4a) in such a way that the sealing ring (7, 7a, 70, 70a, 170, 170a, 270, 270a) is at a sufficient distance from the sealing lip (4, 4a) so that the sealing ring does not hinder the mobility of the sealing lip (4, 4a'),
**characterised in that** the sealing element (5, 5a) bears on its side facing away from the medium side (6) against a support disc (19, 19a), which bears with its radially inner region (20) flat against the transition region of the sealing element (5, 5a) into the sealing lip (4, 4a), is bent with its radially inner section in the direction of the medium side (6) and extends radially to a cylindrical casing (10) of the housing (9), to which the support disc (19) is fastened with its radially outer edge.

2. Sealing arrangement according to claim 1,
**characterised in that** the sealing ring (7, 7a) has a circular cross-section.

3. Sealing arrangement according to claim 1,
**characterised in that** the sealing ring (70, 70a) has an oval cross-section.

4. Sealing arrangement according to one of claims 1 to 3,
**characterised in that** the sealing ring (7, 7a, 70, 70a, 170, 170a, 270, 270a) bears against a support surface of the support disc (19, 19a, 19b).

5. Sealing arrangement according to claim 4,
**characterised in that** at least one bead (30) is provided in the support surface (19, 19a, 19b).

6. Sealing arrangement according to one of claims 1 to 5,
**characterised in that** the surface to be sealed is the lateral surface of a shaft or an axle.

7. Sealing arrangement according to one of claims 1 to 6,
**characterised in that** the surface to be sealed is the lateral surface (27) of a running sleeve (1) which is seated non-rotatably on a shaft or axle.

8. Sealing arrangement according to one of claims 1 to 7,
**characterised in that** a plurality of sealing elements (5, 5a) are arranged axially next to one another, each of which bears with one side against a support surface (19, 19a).

## Revendications

1. Dispositif d'étanchéité comprenant un boîtier (9) et un joint d'arbre, en particulier un joint d'arbre radial, avec au moins un élément d'étanchéité (5, 5a) en polyfluorocarbone, de préférence en polytétrafluoroéthylène, qui est pourvu d'une lèvre d'étanchéité (4, 4a), qui s'applique contre une surface à étancher sous l'effet d'une force radiale, et avec au moins un élément en élastomère formé par une bague d'étanchéité (7, 7a, 70, 70a, 170, 170a, 270, 270a), qui soutient l'élément d'étanchéité (5, 5a), qui est un disque d'étanchéité, dont la zone située radialement à l'intérieur est courbée élastiquement en direction d'un médium (6) pour former la lèvre d'étanchéité (4, 4a), la bague d'étanchéité (7, 7a, 70, 70a, 170, 170a, 270, 270a) étant appliquée à plat sur l'élément d'étanchéité (5, 5a) jusqu'à sa zone de transition vers la lèvre d'étanchéité (4, 4a), de sorte que la bague d'étanchéité (7, 7a, 70, 70a, 170, 170a, 270, 270a) soit suffisamment éloignée de la lèvre d'étanchéité (4, 4a) pour que la bague d'étanchéité n'entrave pas la mobilité de la lèvre d'étanchéité (4, 4a'), **caractérisé en ce que** l'élément d'étanchéité (5, 5a) s'appuie sur son côté opposé au côté du médium (6) sur un disque d'appui (19, 19a), qui s'appuie avec sa section radialement intérieure (20) à plat sur la zone de transition de l'élément d'étanchéité (5, 5a) dans la lèvre d'étanchéité (4, 4a), est recourbée avec sa section radialement intérieure en direction du médium (6) et s'étend radialement jusqu'à une enveloppe cylindrique (10) du boîtier (9), sur laquelle le disque d'appui (19) est fixé avec son bord radialement extérieur.

2. Dispositif d'étanchéité selon la revendication 1,
**caractérisé en ce que** la bague d'étanchéité (7, 7a) présente une section transversale circulaire.

3. Dispositif d'étanchéité selon la revendication 1,
**caractérisé en ce que** la bague d'étanchéité (70, 70a) présente une section transversale ovale.

4. Dispositif d'étanchéité selon l'une des revendications 1 à 3,
**caractérisé en ce que** la bague d'étanchéité (7, 7a, 70, 70a, 170, 170a, 270, 270a) est en appui contre une surface d'appui du disque d'appui (19, 19a, 19b).

5. Dispositif d'étanchéité selon la revendication 4,
**caractérisé en ce qu'**au moins une moulure (30) est prévue dans la surface d'appui (19, 19a, 19b).

6. Dispositif d'étanchéité selon l'une des revendications 1 à 5,
**caractérisé en ce que** la surface à étancher est la surface d'enveloppe d'un arbre ou d'un axe.

7. Dispositif d'étanchéité selon l'une des revendications 1 à 6,
**caractérisé en ce que** la surface à étancher est la surface d'enveloppe (27) d'un manchon de roulement (1) qui est monté fixe en rotation sur un arbre ou un axe.

8. Dispositif d'étanchéité selon l'une des revendications 1 à 7,
**caractérisé en ce qu'**une pluralité d'éléments d'étanchéité (5, 5a) est disposée axialement les uns à côté des autres, lesquels s'appuient par un côté sur une surface d'appui (19, 19a) respective.
